# EUROPEAN PATENT SPECIFICATION

(11) **EP 1 270 526 B1**
(45) Date of publication and mention of the grant of the patent: **13.08.2003**
(21) Application number: 01440182.2
(22) Date of filing: 21.06.2001
(51) Int. Cl.: C03C 13/04

(54) **Optical device with multicomponent oxide glass**
Optische Vorrichtung mit Mehrkomponentenoxidglas
Dispositif optique avec verre à base d'oxides à plusieurs composants

(43) Date of publication of application: 02.01.2003
(73) Proprietor: ALCATEL, 75008 Paris (FR)
(72) Inventor: Baniel, Pascal, F-91210 Draveil (FR); Bigot, Laurent, F-69100 Villeurbanne (FR); Blanchandin, Stéphanie, F-75015 Paris (FR); Didi-Alaoui, Ismahane, F-93400 St Ouen (FR); Roy, Fabien, f-91149 Villebon sur Yvette (FR); Jurdyc, Anne Marie, F-69100 Villeurbanne (FR)
(74) Representative: Rausch, Gabriele, Dr.

(56) References cited:
- JP-A- 3 228 849
- US-A- 3 549 551
- US-A- 4 666 247
- US-A- 6 128 430

## Description

### Background of the Invention:

This invention relates to a new glass composition for optical devices in particularly suited for optical waveguides and for amplifying devices. More particularly the invention relates to a new rare earth doped silicate glass composition with a high amount of lithium and indium oxide in this multicomponent oxide glass.

Telecommunication networks will increase their request for capacity. It is expected that the demand for capacity will continue to increase over the next few years at as pace at least equal to the present one. This means that from today's capacities which are close to 1 Terabit/s per fiber, there will be a need for future increase up to 10 Terabit/s or more per fiber. Considering that at the back bone networks level this span between two regenerators can be up to few thousand kilometers this means that we are talking about networks of ten Petabit/s kilometer or more. Another important measure of capacity is a spectral density that is the number of bit/s per Hz. Typical commercial systems with 10 Gbit/s channels and 100 GHz spacing have a spectral density of 0.1 bit/s per Hz. High data rates like this are obtained by using dense wavelengths division multiplex systems and time division multiplex per channel. Increasing the data rate, spacing between wavelength channels is decreased. In future systems the channel spacing will be 50 GHz between wavelength channels. Decreasing the channel spacing and increasing data rates we will face the physical limits of bandwidth soon.

In the moment the actual used spectral band is the C-band, which is defined in the wavelength range between 1535 to 1565 nm. To increase the data rates more then the C-band must be used. So actually the L-band which is defined in the wavelength range between 1565 nm to 1615 nm is additionally used.

In the high data rate telecommunication networks erbium doped optical amplifiers play an important role. They provide an all optical high gain low noise amplification without the need of costly repeaters. Current erbium doped fiber amplifiers however are not well suited for multi channel amplification due to the variation of there gain spectrum as a function of wavelength denoting gain flatness or the lack thereof. The term "gain flatness" refers to the change in the shape of the gain spectrum over a particular wavelength range. A flat gain means an equal gain for all wavelengths over the wavelength multiplex. The gain spectrum of an optical amplifier depends of the dopant and of the glass composition wherein the dopant is added.

It is also known by prior art that co-doping an erbium doped fiber with aluminum increases erbium solubility and results in a flatter gain spectrum. It is also known to use fluorid glass compositions to exhibit good gain flatness and good energy conversion of the pumping power. In the US 6 128 430, a multicomponent glass composition is proposed with a flat gain spectrum as can be seen from fig. 1 of this document. With proposed glass composition the gain flatness is increased but the total gain is not broadened. To overcome the limits of a glass composition like this one, , flattening filters have to be used to extend over the 32 nm gain range of flatness of the amplifier. With filters the amplifier efficiency is reduced.

### Summery of the Invention:

The idea of the invention is to propose a new glass composition to achieve optical fiber amplifiers operating in extended bands as compared to erbium doped silica aluminum fibers. The objective is to use those fibers in extended C-band over 40 nm or extended L-band amplifiers with erbium doping and even for S-band amplifiers with thulium doping. In a special embodiment, the invention proposes a glass composition based on an optical device having a rare earth doped multicomponent oxide glass (MOG) composition consisting essentially of all of the following 5 oxides:

| | |
|---|---|
| SiO₂ | 30 to 90 mol % |
| Li₂O | up to 40 mol % |
| In₂O₃ | up to 20 mol % |
| Er₂O₃ | up to 2 mol % |
| As₂O₃ | up to 2 % |

with additional minor amounts of other oxides as Al₂O₃, Ga₂O₃, B₂O₃, Nb₂O₅, Ta₂O₅, WO₃, Mo₂O₃, Sb₂O₃, As₂O₃, CaO, BaO, MgO, SrO, Na₂O, PbO, Bi₂O₃, GeO₂, SnO₂, TiO₂, ZrO₂, HfO₂, Y₂O₃, La₂O₃ and lanthanides including every active rare-earth dopants.

In another aspect of the invention, the glass composition is used to build an hybrid form of an optical amplifier. In a preferred embodiment, the glass composition is used to create the core of an optical waveguide while the cladding is made by a silicate glass.

### Brief description of the drawings:

- Fig. 1: shows a comparison of emission spectra of different multicomponent oxide glasses with different compositions.
- Fig. 2: is a schematically view of hybrid optical amplifier.
- Fig. 3: is an example of improvement of gain flatness using hybrid MOG/silica aluminium amplifier

### Description of the invention:

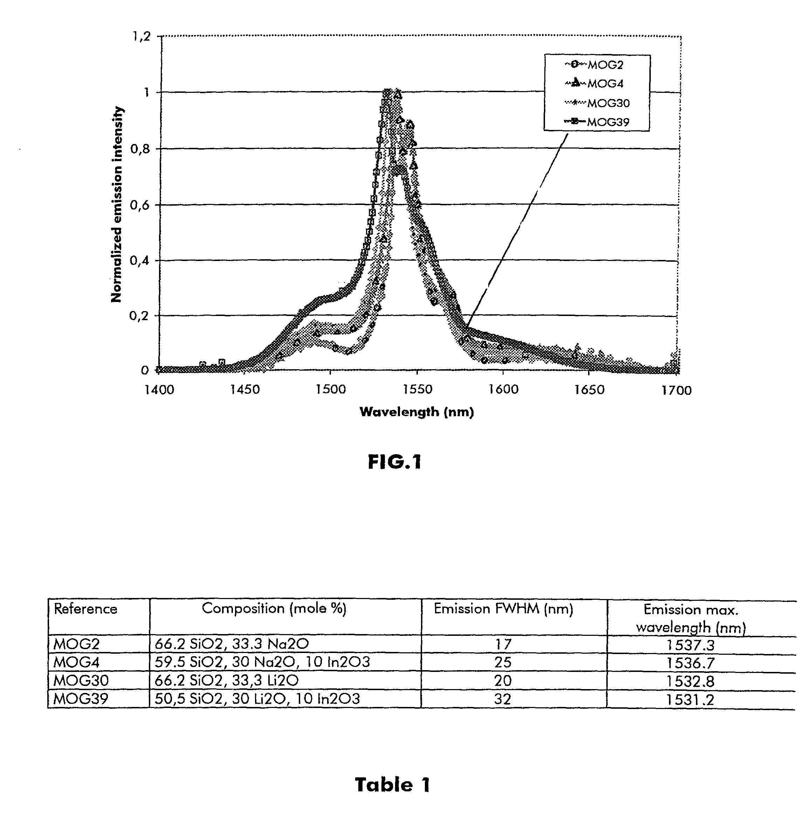

The preferred embodiment of the invention is directed to an optical device having a new rare earth doped glass composition and especially to an optical waveguide, especially an optical fiber having the inventive core composition and a silicate glass cladding. The advantage of the multicomponent oxide glass composition of the invention is based on the influences of lithium oxide and indium oxide associated in the silicate glass environment on glass emission properties. Glasses containing both oxides have shown an improved absorption cross section with 20 % over the silicate aluminum fiber value. The glass composition shows as well an improved emission in the C-band. Fig. 1 compares the emission spectra of different glass compositions and Table 1 summarizes the main emission properties of glass compositions. It can be seen that the use of lithium oxide and indium oxide allows to increase the emission FWHM (full width half maximum) up to 32 nm for the composition MOG 39 as compared to only 17 nm for the glass composition MOG 2. It can also be seen that the emission spectra of MOG glass compositions show an increased emission part at wavelengths where classical silica aluminum fibers have a low gain, especially in the 1530-1540nm wavelength range . The basic glass composition can be improved either from the point of view of glass stability and glass characteristic parameters or even for emission properties using other oxide component such as Al₂O₃, Ga₂O₃, B₂O₃, Nb₂O₅, Ta₂O₅, WO₃, Mo₂O₃, Sb₂O₃, As₂O₃, CaO, BaO, MgO, SrO, Na₂O, PbO, Bi₂O₃, GeO₂, SnO₂, TiO₂, ZrO₂, HfO₂, Y₂O₃, La₂O₃. The wavelength of maximum emission can be particularly tailored using sodium oxide (Na₂O) addition (see Fig.1 and Table 1).
The multicomponent oxide glasses are prepared using classical platinum or aluminum crucible melting powders at temperatures between 1200 and 1700 °C under controlled atmosphere. The glass melt is than poured in a graphite mold and annealed near the glass transition temperature Tg during several hours. The obtained glass blocks can be cut in small cubes which are polished and cleaned before drawing operations. Single mode fiber drawing can be carried out using the well known double-crucible technique. The core glass cubes are inserted in a clean environment in the inner crucible. The clad glass is prepared using the same technique and is inserted in the outer crucible. The clad glass can be also a commercial glass with adapted properties in viscosity, thermal expansion coefficient, refractive index to obtain the desired waveguide. Other fiber fabrication techniques such as rod in tube method or soft core method can also be used to prepare the doped fibers.

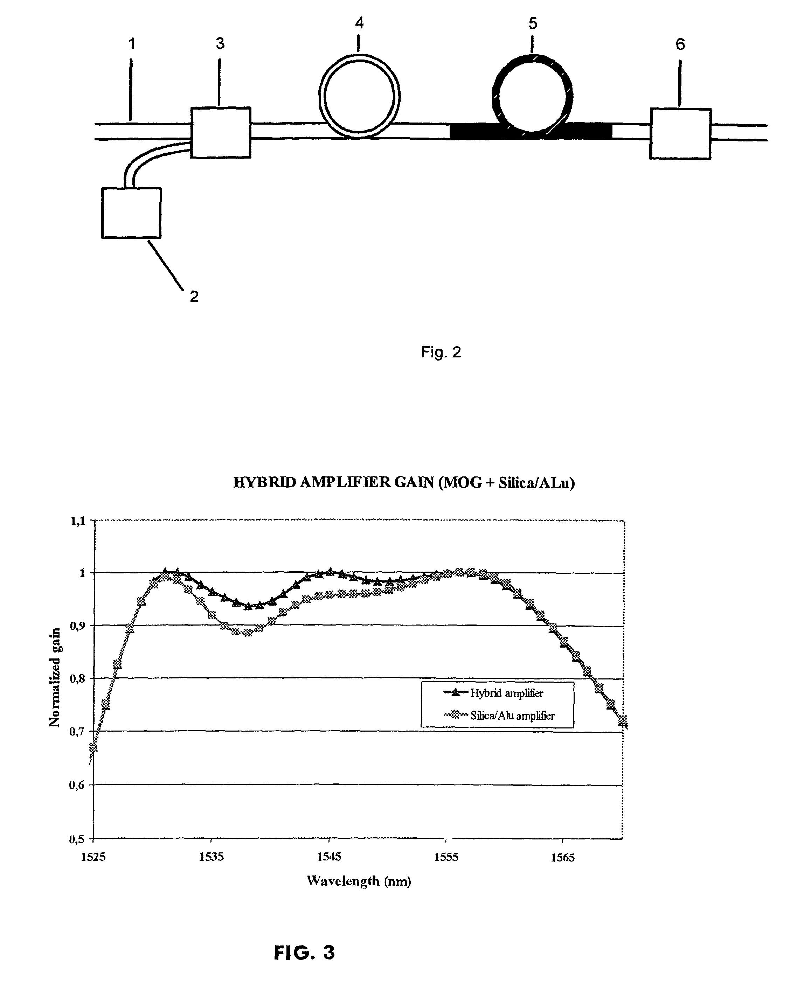

Fig. 2 shows in a schematic way an arrangement of an hybrid optical fiber amplifier using two different types of fiber, one being the multicomponent oxide glass composition following the invention and the second type conventional aluminum silicate fiber with a dopant (typically erbium for C or L bands).
A transmission line is connected with coupler element 3. The second input of the coupler 3 is connected to a pump laser 2. The output of the coupler 3 is connected to amplifying fibers 4 and 5. Fiber 4 is in this embodiment a conventional silicate aluminum fiber. The output of the first fiber 4 is spliced to the second piece of fiber 5. This fiber piece 5 consists of the multi component oxide glass composition of the invention. The output of this fiber piece 5 is connected to a filter device 6. With a combination of conventional doped fiber and the inventional new multicomponent oxide glass fiber an extended wavelength range in an hybrid fiber amplification device can be obtained. With the additional support of flattening filters the gain flatness of this hybrid amplifiers is optimized.
In an other preferred embodiment the use of flattening filters is not necessary. With a good adaptation of fiber pieces of different compositions, a good gain flatness without using any kind of filtering is obtained. Fig. 3 shows an example of typical gain shape obtained with an hybrid MOG/silica-aluminium amplifier without gain flattening filter. A better gain flatness (6% gain excursion only) is obtained as compared to typical silica-aluminium amplifier (typically 12 to 18 % gain excursion).

An other preferred embodiment uses a solution with different fiber pieces 4 and 5 but both pieces of different multicomponent oxide glass composition. To obtain a better gain flatness, more than two fiber pieces are combined in a multi-stage fiber amplifier.

The structure of combining different multicomponent oxide glass fibers is repeated in another embodiment.

The position of any amplifying fiber can be changed in the multi-stage amplifier configuration in order to improve amplifier characteristics (noise figure, output power, gain value), as well as adding optical components (filters, isolators, multiplexers, pumps, OADM's, ...) between amplifier stage without changing the scope of this invention, as defined in the claims.

## Claims

1. An optical device having a rare earth doped multicomponent oxide glass (MOG) composition consisting essentially of all of the following 5 oxides:
| | |
|---|---|
| SiO₂ | 30 to 90 mol % |
| Li₂O | up to 40 mol % |
| In₂O₃ | up to 20 mol % |
| Er₂O₃ | up to 2 mol % |
| As₂O₃ | up to 2 % |
with additional minor amounts of other oxides as Al₂O₃, Ga₂O₃, B₂O₃, Nb₂O₅, Ta₂O₅, WO₃, Mo₂O₃, Sb₂O₃, As₂O₃, CaO, BaO, MgO, SrO, Na₂O, PbO, Bi₂O₃, GeO₂, SnO₂, TiO₂, ZrO₂, HfO₂, Y₂O₃, La₂O₃ and lanthanides including every active rare-earth dopants.

2. An optical device according to claim 1 where the device is an optical waveguide.

3. An optical device according to claim 2 where the device is an optical fiber.

4. An optical device according to claim 3 where the core consists of the composition of claim 1 and the cladding is a silicate glass.

5. An optical device according to claim 3 where at least one piece of MOG optical fiber is combined with at least one silica fiber or at least one MOG optical fiber of different composition.

6. An optical device according to claim 4 where the MOG optical fiber is used as an amplifying element in an optical fiber amplifier.

7. An optical device according to claim 5 where at least one MOG optical fiber in combination with the at least one silica fiber is used as an amplifying element in an optical fiber amplifier.

8. An optical amplifying system comprising an optical device according to claim 1.

## Patentansprüche

1. Eine optische Vorrichtung, die eine Mehrkomponentenoxidglas-(MOG)-Zusammensetzung hat, die im Wesentlichen aus allen der folgenden 5 Oxide besteht:
| | |
|---|---|
| SiO₂ | 30 bis 90 Mol-% |
| Li₂O | bis zu 40 Mol-% |
| In₂O₃ | bis zu 20 Mol-% |
| Er₂O₃ | bis zu 2 Mol-% |
| As₂O₃ | bis zu 2 % |
mit zusätzlichen geringen Mengen anderer Oxide, wie Al₂O₃, Ga₂O₃, B₂O₃, Nb₂O₅, Ta₂O₅, WO₃, Mo₂O₃, Sb₂O₃, As₂O₃, CaO, BaO, MgO, SrO, Na₂O, PbO, Bi₂O₃, GeO₂, SnO₂, TiO₂, ZrO₂, HfO₂, Y₂O₃, La₂O₃ und Lanthanoide, einschließlich aller aktiven Seltenen-Erd-Dotierstoffe.

2. Eine optische Vorrichtung gemäß Anspruch 1, wobei die Vorrichtung ein Lichtwellenleiter ist.

3. Eine optische Vorrichtung gemäß Anspruch 2, wobei die Vorrichtung eine Glasfaser ist.

4. Eine optische Vorrichtung gemäß Anspruch 3, wobei der Kern die Zusammensetzung aus Anspruch 1 hat und der Mantel ein Quarzglas ist.

5. Eine optische Vorrichtung gemäß Anspruch 3, wobei mindestens ein Stück MOG-Glasfaser mit mindestens einer Quarzglas-Faser oder mit mindestens einer MOG-Glasfaser anderer Zusammensetzung kombiniert ist.

6. Eine optische Vorrichtung gemäß Anspruch 4, wobei die MOG-Glasfaser als ein verstärkendes Element in einem Glasfaser-Verstärker verwendet wird.

7. Eine optische Vorrichtung gemäß Anspruch 5, wobei mindestens eine MOG-Glasfaser in Kombination mit mindestens einer Quarzglas-Faser als ein verstärkendes Element in einem Glasfaser-Verstärker verwendet wird.

8. Ein optisches Verstärkersystem, das aus einer optischen Vorrichtung gemäß Anspruch 1 besteht.

## Revendications

1. Dispositif optique ayant une composition de verre à oxydes composite (MOG) dopé avec des terres rares comprenant essentiellement l'ensemble des cinq oxydes suivants :
| | |
|---|---|
| SiO₂ | de 30 à 90 en pourcentage molaire |
| Li₂O | jusqu'à 40 en pourcentage molaire |
| In₂O₃ | jusqu'à 20 en pourcentage molaire |
| Er₂O₃ | jusqu'à 2 en pourcentage molaire |
| As₂O₃ | jusqu'à 2 % |
avec des quantités supplémentaires mineures d'autres oxydes tels que : Al₂O₃, Ga₂O₃, B₂O₃, Nb₂O₅, Ta₂O₅, WO₃, Mo₂O₃, Sb₂O₃, AS₂O₃, CaO, BaO, MgO, SrO, Na₂O, PbO, Bi₂O₃, GeO₂, SnO₂, TiO₂, ZrO₂, HfO₂, Y₂O₃, La₂O₃ et des lanthanides, dont tous les dopants de terres rares actifs.

2. Dispositif optique selon la revendication 1, dans lequel le dispositif est un guide d'ondes optique.

3. Dispositif optique selon la revendication 2, dans lequel le dispositif est une fibre optique.

4. Dispositif optique selon la revendication 3, dans lequel le coeur a la composition décrite dans la revendication 1 et dans lequel la gaine est composée d'un verre de silice.

5. Dispositif optique selon la revendication 3, dans lequel au moins une fibre optique MOG est combinée avec au moins une fibre de verre de silice ou au moins une fibre optique MOG de composition différente.

6. Dispositif optique selon la revendication 4, dans lequel la fibre optique MOG est utilisée comme élément d'amplification dans un amplificateur à fibre optique.

7. Dispositif optique selon la revendication 5, dans lequel au moins une fibre optique MOG en combinaison avec au moins une fibre de silice est utilisée comme élément d'amplification dans un amplificateur à fibre optique.

8. Système d'amplification optique comprenant un dispositif optique selon la revendication 1.
